(19) **Europäisches Patentamt**
**European Patent Office**
**Office européen des brevets**

(11) **EP 4 691 675 A1**

(12) **EUROPEAN PATENT APPLICATION**
published in accordance with Art. 153(4) EPC

(43) Date of publication:
**11.02.2026 Bulletin 2026/07**

(21) Application number: **24780607.8**

(22) Date of filing: **28.03.2024**

(51) International Patent Classification (IPC):
**B23C 5/20** (2006.01)          **B23C 5/06** (2006.01)
**B23C 5/10** (2006.01)

(52) Cooperative Patent Classification (CPC):
**B23C 5/06; B23C 5/10; B23C 5/20**

(86) International application number:
**PCT/JP2024/012588**

(87) International publication number:
**WO 2024/204506 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023053255**

(71) Applicant: **MOLDINO Tool Engineering, Ltd.
Tokyo 130-0026 (JP)**

(72) Inventors:
• **UEMOTO Sho**
  **Narita-shi, Chiba 286-0825 (JP)**
• **NAGASHIMA Yoshimitsu**
  **Narita-shi, Chiba 286-0825 (JP)**
• **TAKAHASHI Hayato**
  **Narita-shi, Chiba 286-0825 (JP)**
• **INAGAKI Fumihiko**
  **Narita-shi, Chiba 286-0825 (JP)**

(74) Representative: **Hoffmann Eitle
Patent- und Rechtsanwälte PartmbB
Arabellastraße 30
81925 München (DE)**

(54) **CUTTING INSERT, AND INDEXABLE CUTTING EDGE TYPE ROTARY CUTTING TOOL**

(57)     A cutting insert (1) includes a rake face (2), a seating surface (3), a side surface (10, 10A, 10B), and a mounting hole (7), in which a cutting edge portion (20) is provided on an intersecting ridgeline between the rake face (2) and the side surface (10, 10A, 10B), the cutting edge portion (20) includes a corner edge (24), a main cutting edge (21) connected to the corner edge (20), a convex curved edge (23) connected to the main cutting edge (21), and a wiper edge (22) connected to the convex curved edge (23), the side surface (10, 10A, 10B) includes a first side surface (11A) continuous to the main cutting edge (21), a second side surface (11B) continuous to the wiper edge (22), and a boundary region (11C) continuous to the convex curved edge (23), the first side surface (11A) and the second side surface (11B) are laterally partitioned by the boundary region (11C) extending between the rake face (2) and the seating surface (3) in a side view in which the side surface (10B) is viewed as a front, a flank angle ($\theta1$) of the main cutting edge (21) and a flank angle ($\theta2$) of the wiper edge (22) satisfy a relationship of $\theta1 < \theta2$, and in a case where an end point of the boundary region (11C) on the rake face side is defined as an end point (P) and a center line of the mounting hole (7) is denoted by O1, the end point (P) is located at a position farther from the corner edge (20) than the center line (O1) in the side view.

FIG. 3

## Description

TECHNICAL FIELD

The present invention relates to a cutting insert and an indexable rotary cutting tool.

Priority is claimed on Japanese Patent Application No. 2023-053255, filed March 29, 2023, the content of which is incorporated herein by reference.

BACKGROUND ART

In the related art, an indexable rotary cutting tool including a cutting insert has been known. Patent Document 1 discloses a cutting insert capable of increasing the rigidity of a corner edge and improving the machining efficiency.

CITATION LIST

PATENT DOCUMENT

Patent Document 1: Japanese Unexamined Patent Application, First Publication No. 2022-151053 (A)

SUMMARY OF INVENTION

TECHNICAL PROBLEM

In the cutting insert disclosed in Patent Document 1, a flank angle with respect to a main cutting edge and a flank angle with respect to a sub-cutting edge that is a wiper edge are the same angle. In the wiper edge, it is important to suppress the wear of the flank face, and in the main cutting edge, it is important to have the cutting edge strength, but, in a case where the flank angle is increased in order to suppress the wear of the flank face of the wiper edge, the flank angle of the main cutting edge is increased, and the cutting edge strength is decreased. The cutting insert disclosed in Patent Document 1 has an issue in that it is not possible to achieve both the strength of the main cutting edge and the wear resistance of the wiper edge.

In addition, the cutting insert disclosed in Patent Document 1 is mounted in the holder with the flank face adjacent to the main cutting edge as a restraining surface. In this case, since a force applied to the main cutting edge during cutting acts in a direction perpendicular to the above-described restraining surface, there is an issue in that it is difficult to suppress the movement of the cutting insert in a direction parallel to the restraining surface.

SOLUTION TO PROBLEM

(1) An aspect of the present invention provides a cutting insert having a polygonal plate shape, including: a rake face configured to form one of a pair of polygonal surfaces; a seating surface configured to form the other of the pair of polygonal surfaces; a side surface configured to connect the rake face and the seating surface; and a mounting hole configured to be open to the rake face and the seating surface and to penetrate the cutting insert in a thickness direction. A cutting edge portion is provided on an intersecting ridgeline between the rake face and the side surface. The cutting edge portion includes a corner edge, a main cutting edge connected to the corner edge, a convex curved edge connected to the main cutting edge, and a wiper edge connected to the convex curved edge. The side surface includes a first side surface continuous to the main cutting edge, a second side surface continuous to the wiper edge, and a boundary region continuous to the convex curved edge. The first side surface and the second side surface are laterally partitioned by the boundary region extending between the rake face and the seating surface in a side view in which the side surface is viewed as a front. A flank angle $\theta 1$ of the main cutting edge and a flank angle $\theta 2$ of the wiper edge satisfy a relationship of $\theta 1 < \theta 2$. In a case where an end point of the boundary region on the rake face side is defined as an end point P and a center line of the mounting hole is denoted by O1, the end point P is located at a position farther from the corner edge than the center line O1 in the side view.

(2) According to (1), in a case where an end point of the boundary region on the seating surface side is defined as an end point Q, the end point Q may be located at a position closer to the corner edge than the center line O1 in the side view.

(3) According to (1) or (2), the flank angles $\theta 1$ and $\theta 2$ may satisfy $8° \leq \theta 1 \leq 18°$ and $12° \leq \theta 2 \leq 25°$.

(4) According to any one of (1) to (3), in the side view, an angle $\theta 3$ formed between a straight line L connecting the end point P and the end point Q and the seating surface may satisfy $45° \leq \theta 3 \leq 85°$.

(5) According to any one of (1) to (4), the main cutting edge may be a linear cutting edge in a plan view in which the rake face is viewed as a front, and in a case where a cutting edge length of the main cutting edge is denoted by L1 and an inscribed circle diameter of the rake face is denoted by D1, $0.35 \times D1 \leq L1 \leq 0.60 \times D1$ may be satisfied.

(6) An indexable rotary cutting tool including: the cutting insert according to any one of (1) to (5); and a holder in which the cutting insert is attachably and detachably mounted and that is configured to rotate about a rotation axis, in which the holder includes an insert mounting seat that comes into contact with a flank face for the wiper edge of the cutting insert and with the seating surface.

(7) According to (6), a tool's lowest point may be located on the wiper edge, and a cutting angle K may satisfy $5° \leq K \leq 25°$.

ADVANTAGEOUS EFFECTS OF INVENTION

According to the aspects of the present invention, there is provided the cutting insert capable of achieving both the strength of the main cutting edge and the suppression of the wear of the flank face of the wiper edge and having excellent restraining to the holder, and the indexable rotary cutting tool including the cutting insert.

BRIEF DESCRIPTION OF DRAWINGS

[FIG. 1] A perspective view showing a cutting insert according to an embodiment.

[FIG. 2] A plan view showing a configuration of a rake face of the cutting insert shown in FIG. 1.

[FIG. 3] A side view showing a configuration of a side surface of the cutting insert.

[FIG. 4A] A cross-sectional view of the cutting insert taken along a IVa-IVa line of FIG. 2.

[FIG. 4B] A cross-sectional view of the cutting insert taken along a IVb-IVb line of FIG. 2.

[FIG. 5] A side view of an indexable rotary cutting tool.

[FIG. 6] A perspective view of the indexable rotary cutting tool.

[FIG. 7] A perspective view showing a holder in a state where a cutting insert is removed.

[FIG. 8] An explanatory diagram showing a change in a restraining state of the cutting insert due to a change in the holder over time. A left side shows a cutting insert restrained in a new holder, and a right side shows a cutting insert restrained in a worn holder after long-term use.

[FIG. 9] An explanatory diagram showing a change in a restraining position.

[FIG. 10] A perspective view showing a cutting insert of a modification example.

[FIG. 11] A plan view showing a configuration of a rake face of the cutting insert shown in FIG. 10.

[FIG. 12] A side view showing a configuration of a side surface of the cutting insert shown in FIG. 10.

DESCRIPTION OF EMBODIMENTS

Hereinafter, an embodiment to which the present invention is applied will be described in detail with reference to accompanying drawings. In the drawings used in the following description, a portion that is not a feature may be omitted for sake of convenience in order to make the feature portion easy to understand.

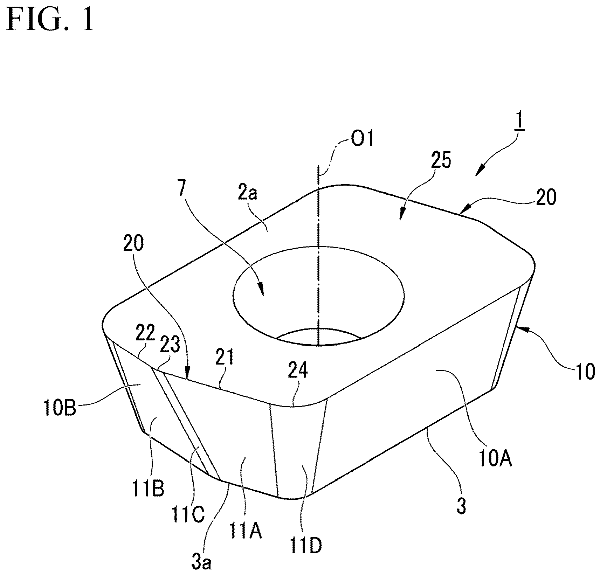

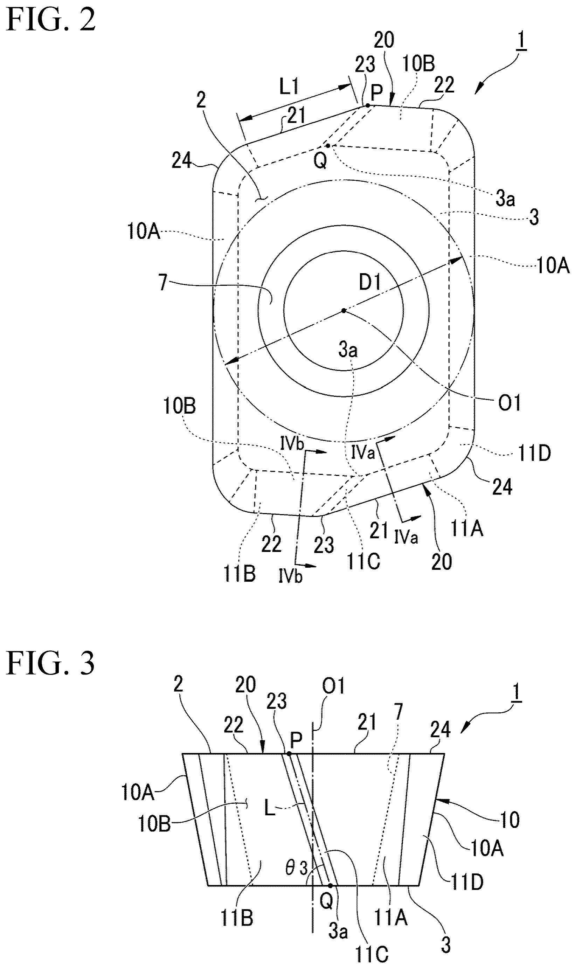

FIG. 1 is a perspective view showing a cutting insert 1 according to the embodiment. FIG. 2 is a plan view showing a configuration of a rake face 2 of the cutting insert 1 shown in FIG. 1, and is a plan view in which the rake face 2 is viewed from the front side. FIG. 3 is a side view showing a configuration of a side surface 10 of the cutting insert 1, and is a side view in which the side surface is viewed as a front.

The cutting insert 1 has a polygonal plate shape (quadrangular plate shape in the present embodiment) that is rotationally symmetrical with respect to a center line O1 extending in a thickness direction. In the present embodiment, the center line O1 is a central axis line of a mounting hole 7 that penetrates the cutting insert 1 in the thickness direction. In the following description, a direction along the center line O1 may be simply referred to as the thickness direction. In addition, a direction perpendicular to the center line O1 may be simply referred to as a radial direction. Similarly, a circumferential direction about an axis centered on the center line O1 may be simply referred to as a circumferential direction.

The cutting insert 1 includes the rake face 2 that forms one of a pair of polygonal surfaces, a seating surface 3 that forms the other of the pair of polygonal surfaces, the side surface 10 that connects the rake face 2 and the seating surface 3, and the mounting hole 7 for mounting in a holder. As shown in FIG. 2, the rake face 2 and the seating surface 3 are formed in a substantially quadrangular shape. The seating surface 3 is included inside a projection region of the rake face 2 in the thickness direction. The side surface 10 includes two side surfaces 10A that are continuous to long sides of the rake face 2 and two side surfaces 10B that are continuous to short sides of the rake face 2.

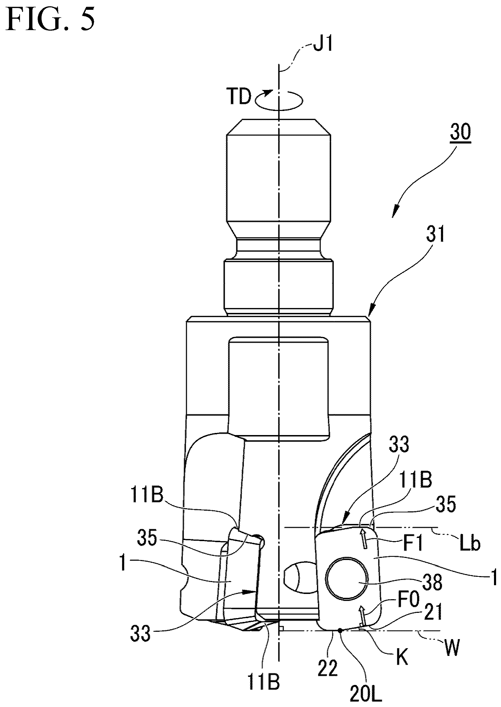

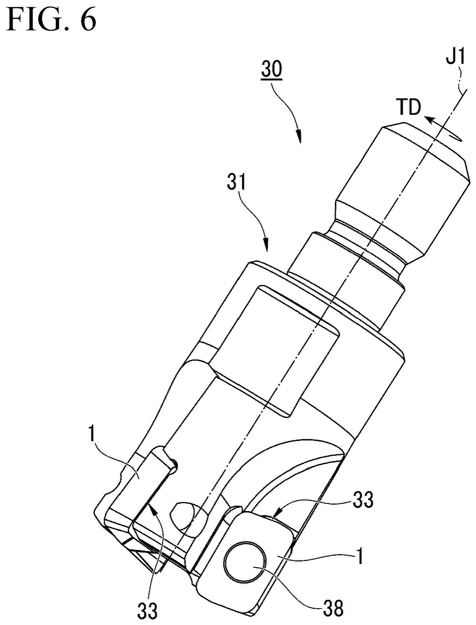

As shown in FIGS. 5 and 6 described later, the cutting insert 1 is attachably and detachably mounted in a tip end portion of a holder 31 by a clamp screw 38. Therefore, on the rake face 2 and the seating surface 3, the mounting hole 7 penetrating the cutting insert 1 in the thickness direction is formed, and the clamp screw 38 is inserted into the mounting hole 7. The mounting hole 7 extends along the center line O1 of the cutting insert 1. The mounting hole 7 is a tapered through-hole with the center line O1 as a central axis.

The cutting edge portion 20 is provided on an intersecting ridgeline between the rake face 2 and the side surface 10B continuous to the short side of the rake face 2.

The cutting edge portion 20 includes a corner edge 24, a main cutting edge 21 continuous to the corner edge 24, and a wiper edge 22 continuous to the main cutting edge 21. In the present embodiment, the cutting edge portion 20 includes a convex curved edge 23 that connects the main cutting edge 21 and the wiper edge 22. In the plan view of the rake face 2, the corner edge 24, the main cutting edge 21, the convex curved edge 23, and the wiper edge 22 are disposed in this order rightward (clockwise). In addition, the rake face 2 may include a reference plane 2a parallel to the seating surface 3.

In the cutting insert 1 of the present embodiment, two cutting edge portions 20 composed of the corner edge 24, the main cutting edge 21, the convex curved edge 23, and the wiper edge 22 are provided at intervals of 180° in the circumferential direction about the center line O1. The two cutting edge portions 20 are disposed rotationally symmetrically about the center line O1. A pair of cutting edge portions 20 are separated from each other with the long side of the rake face 2 interposed therebetween.

The main cutting edge 21 is located on the short side of the rake face 2 and extends linearly in the plan view of the rake face 2. The main cutting edge 21 is the longest among the cutting edges forming the cutting edge portion 20. The main cutting edge 21 is directed to a rotational direction TD side of the holder 31 and faces a workpiece in a state where the cutting insert 1 is mounted in the holder 31 (see FIGS. 5 and 6).

In the present specification, the cutting edge being "linear" includes not only a completely linear shape but also a substantially linear shape within a certain error range. Specifically, in a case of a cutting insert in which a length of the main cutting edge 21 is approximately 3 mm, a gentle arc shape in which the radius of curvature is more than 50 mm or a curved shape that meanders with a meandering width of 0.05 mm or less is also included in the "linear" in the present specification.

The corner edge 24 is continuous to the main cutting edge 21 and is located at a corner portion of the rake face 2. The corner edge 24 has an arc shape in the plan view shown in FIG. 2. On the other hand, the main cutting edge 21 extends linearly. Therefore, a boundary between the corner edge 24 and the main cutting edge 21 is determined by a boundary between the linear portion and the arc shape portion in the cutting edge portion 20.

The wiper edge 22 is located on a side of the main cutting edge 21 opposite to the corner edge 24. The wiper edge 22 is a linear cutting edge extending in a direction intersecting the main cutting edge 21. The wiper edge 22 extends in an inclined manner to be closer to the center line O1 as the wiper edge 22 is separated from the main cutting edge 21 in the extending direction of the main cutting edge 21. Therefore, a boundary portion between the main cutting edge 21 and the wiper edge 22 has a shape protruding outward. In the present embodiment, the convex curved edge 23 is provided between the main cutting edge 21 and the wiper edge 22. The convex curved edge 23 may have an arc shape or a curved shape other than the arc.

In addition, the convex curved edge 23 may be a pseudo arc consisting of a plurality of consecutive short straight lines.

Since the cutting insert 1 in the present embodiment is a positive type cutting insert, as shown in FIGS. 1 and 3, the side surface 10B continuous to the cutting edge portion 20, that is, the flank face of the cutting edge portion 20 is an inclined face along a substantially flank angle. The flank face of the cutting edge portion 20 connects the rake face 2 and the seating surface 3.

The side surface 10B, which is the flank face of the cutting edge portion 20, has a first side surface 11A continuous to the main cutting edge 21 and a second side surface 11B continuous to the wiper edge 22. The first side surface 11A and the second side surface 11B are laterally partitioned by a boundary region 11C extending between the rake face 2 and the seating surface 3 in the side view. In the present embodiment, the boundary region 11C is continuous to the convex curved edge 23 on the rake face 2 side and is continuous to the ridgeline 3a that is a part of the seating surface 3 on the seating surface 3 side. In the present embodiment, the convex curved edge 23 and the ridgeline 3a have the same shape in the plan view of the rake face 2, but the convex curved edge 23 and the ridgeline 3a may have different shapes, for example, the radius of curvature of the ridgeline 3a may be smaller than the radius of curvature of the convex curved edge 23.

The boundary region 11C is a boundary ridgeline portion between the first side surface 11A and the second side surface 11B. In the present embodiment, the boundary region 11C is formed in a relatively gentle convex curved surface shape to smoothly connect the first side surface 11A and the second side surface 11B. Therefore, in the side view, the width of the boundary region 11C is relatively large. In addition, the convex curved edge 23 continuous to the boundary region 11C also has a relatively gentle convex curved shape.

the width of the boundary region 11C can be made narrower, and the convex curved edge 23 can be made sharper in a convex curved shape. That is, the widths of the convex curved edge 23 and the boundary region 11C are not particularly limited and can be adjusted as appropriate based on a state of the machining surface of the workpiece and the like.

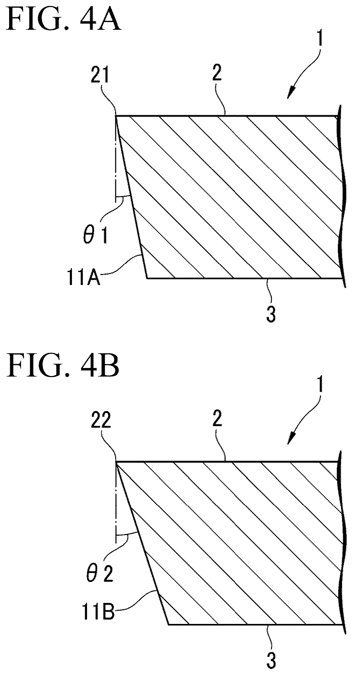

Here, FIG. 4A is a cross-sectional view of the cutting insert 1 taken along a IVa-IVa line of FIG. 2. FIG. 4B is a cross-sectional view of the cutting insert 1 taken along a IVb-IVb line of FIG. 2. The IVa-IVa line is perpendicular to the main cutting edge 21, and the IVb-IVb line is perpendicular to the wiper edge 22.

Here, $\theta 1$ shown in FIG. 4A is a flank angle of the main cutting edge 21, and $\theta 2$ shown in FIG. 4B is a flank angle of the wiper edge 22. As shown in these drawings, the flank angle $\theta 2$ of the wiper edge 22 is larger than the flank angle $\theta 1$ of the main cutting edge 21. That is, the flank angle $\theta 1$ of the main cutting edge 21 and the flank angle $\theta 2$ of the wiper edge 22 satisfy a relationship of $\theta 1 <$

θ2.

Since the flank angle θ1 of the main cutting edge 21 and the flank angle θ2 of the wiper edge 22 are different from each other, the flank angle θ1 and the flank angle θ2 can be individually designed. As a result, in a case where the flank angle θ1 of the main cutting edge 21 is set to be small, the edge tip strength of the main cutting edge 21 can be secured. In addition, in a case where the flank angle θ2 of the wiper edge 22 is set to be large, the wear of the second side surface 11B, which is the flank face of the wiper edge 22, can be suppressed. Since both the edge tip strength of the main cutting edge 21 and the suppression of the wear of the flank face of the wiper edge 22 can be achieved, the cutting insert 1 having a long life can be obtained.

Since a magnitude relationship between the flank angles θ1 and θ2 is defined as described above, as shown in FIG. 3, the boundary region 11C that partitions the first side surface 11A and the second side surface 11B extends obliquely with respect to the center line O1 in the side surface 10B. Accordingly, the width of the first side surface 11A in a direction along the short side of the rake face 2 gradually decreases from the rake face 2 toward the seating surface 3. On the other hand, the width of the second side surface 11B in a direction along the short side of the rake face 2 gradually increases from the rake face 2 toward the seating surface 3.

In the present embodiment, it is preferable that the flank angles θ1 and θ2 satisfy $8° \leq θ1 \leq 18°$ and $12° \leq θ2 \leq 25°$.

By setting the flank angle θ1 to be in the above-described range, it is possible to secure the edge tip strength of the main cutting edge 21 while avoiding the contact between the flank face of the main cutting edge 21 and the surface of the workpiece. As a result, high-efficiency machining is facilitated. The flank angle θ1 is more preferably 9° or more. The flank angle θ1 is more preferably 15° or less.

By setting the flank angle θ2 to be in the above-described range, the wear of the flank face of the wiper edge 22 can be suppressed, and a high-quality machining surface can be obtained. In addition, since the cutting insert 1 can secure the strength of the edge tip of the cutting insert 1 and the entire cutting insert 1, the occurrence of the fracture to the cutting insert 1 can be suppressed, and the life can be extended. More preferably, the flank angle θ2 is 15° or more. The flank angle θ2 is more preferably 20° or less.

In the present embodiment, as shown in FIG. 3, in a case where an end point of the boundary region 11C, which extends obliquely with respect to the center line O1, on the rake face 2 side is defined as an end point P and an end point of the boundary region 11C on the seating surface 3 side is defined as an end point Q, the end point P is located at a position farther from the corner edge 24 than the center line O1 in the side view of the side surface 10B.

In the present embodiment, the end point P is defined as a center point of a cutting edge length of the convex curved edge 23. Further, the end point Q is defined as a center point of a ridgeline length of the ridgeline 3a.

Since the end point P is located at a position farther from the corner edge 24 than the center line O1 in the side view of the side surface 10B, the entire convex curved edge 23, which is the intersection region between the boundary region 11C and the rake face 2, is located at a position farther from the corner edge 24 than the center line O1. As a result, the linear main cutting edge 21 is configured to extend to a position farther from the corner edge 24 than the center line O1. The linear main cutting edge 21 has a larger range of cutting into the workpiece than the arc-shaped cutting edge, and heat due to friction with the workpiece is dispersed over a wide range of the main cutting edge 21 in a length direction. Therefore, the local temperature rise is less likely to occur as compared with the arc-shaped main cutting edge, and the effect of suppressing the wear of the rake face and the flank face due to heat can be obtained. In the present embodiment, since the length of the linear main cutting edge 21 is increased by the above-described configuration, the temperature rise during a cutting operation can be further suppressed, and the wear of the rake face and the flank face can be further reduced.

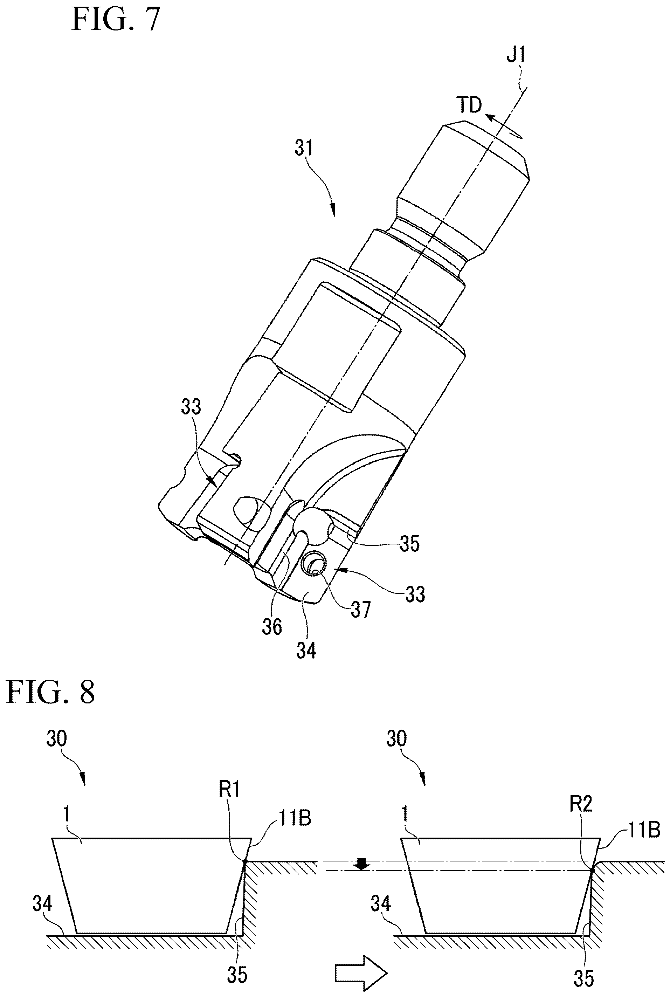

FIGS. 5 and 6 are perspective views showing a configuration of an indexable rotary cutting tool 30 having a plurality of cutting inserts 1 and the holder 31 in which the cutting inserts 1 are attachably and detachably mounted. FIG. 7 is a perspective view showing the holder 31 in a state where the cutting insert 1 is removed.

The indexable rotary cutting tool 30 performs the cutting operation by rotating the holder 31 in the rotational direction TD about a rotation axis J1. The indexable rotary cutting tool 30 includes the holder 31 that rotates about the rotation axis J1, and three cutting inserts 1 mounted in the holder 31.

As shown in FIG. 7, three insert mounting seats 33 are provided at the tip end portion of the holder 31. The insert mounting seat 33 has a mounting seat bottom surface 34 and two mounting seat wall surfaces 35 and 36.

The mounting seat bottom surface 34 has a rectangular shape having an area substantially equal to an area of the seating surface 3 of the cutting insert 1 and is directed to the rotational direction TD. The mounting seat wall surface 35 is a surface facing the tip side in the rotation axis J1 direction, and extends in the radial direction of the holder 31 along the short side of the mounting seat bottom surface 34. The mounting seat wall surface 36 is a surface facing the outer side in the radial direction of the holder 31 and extends in the rotation axis J1 direction along the long side of the mounting seat bottom surface 34. A screw hole 37 is formed substantially at the center of the mounting seat bottom surface 34.

The mounting seat bottom surface 34 faces and comes into contact with the seating surface 3 of the cutting insert 1. The mounting seat wall surface 35 faces and comes into contact with the side surface 10B of the cutting insert 1. The mounting seat wall surface 36 faces and comes into contact with the side surface 10A of the cutting insert 1.

The cutting insert 1 is mounted in the insert mounting seat 33 of the holder 31 by using the clamp screw 38. The cutting insert 1 is mounted in the holder 31 by clamping the clamp screw 38 inserted into the mounting hole 7 to the screw hole 37 formed at the center of the mounting seat bottom surface 34.

In the cutting insert 1 of the present embodiment, the seating surface 3 is closely mounted in the mounting seat bottom surface 34 of the holder 31, and the side surfaces 10A and 10B are fixed by being brought into contact with the mounting seat wall surfaces 36 and 35, respectively. Further, by tightening the clamp screw 38 in the screw hole 37, the seating surface 3 is pressed against the mounting seat bottom surface 34, and the side surfaces 10A and 10B are pressed against the mounting seat wall surfaces 36 and 35.

In a case of the present embodiment, as shown in FIGS. 5 and 6, in a case where the cutting insert 1 is mounted in the holder 31, the second side surface 11B of the side surface 10B of the cutting insert 1 is pressed against the mounting seat wall surface 35 facing the tip side of the holder 31. That is, the second side surface 11B, which is the flank face of the wiper edge 22, serves as a restraining portion.

In the cutting insert 1, as shown in FIG. 3, since the flank angle $\theta 2$ of the second side surface 11B is formed to be larger than the flank angle $\theta 1$ of the first side surface 11A, the width of the second side surface 11B in a direction perpendicular to the center line O1 is increased toward the seating surface 3. With this configuration, the area of the second side surface 11B can be secured to be larger as compared with a case where the boundary region 11C extends in parallel with the center line O1. That is, the area of the second side surface 11B used as a restraining surface of the cutting insert 1 to the holder 31 can be secured to be large. Since a contact area between the second side surface 11B and the mounting seat wall surface 35 can be increased, a restraining force of the cutting insert 1 to the holder 31 can be increased.

In addition, in the present embodiment, it is preferable that the end point Q shown in FIG. 3 is located on a side (right side in the drawing) closer to the corner edge 24 than the center line O1. Accordingly, the width of the second side surface 11B in a direction perpendicular to the center line O1 can be secured to be larger, and thus the restraining force of the cutting insert 1 to the holder 31 can be further increased.

In the present embodiment, as shown in FIG. 3, in the side view of the side surface 10B of the cutting insert 1, it is preferable that an angle $\theta 3$ formed between a straight line L connecting the end point P and the end point Q and the seating surface satisfies $45° \leq \theta 3 \leq 85°$.

By setting the angle $\theta 3$ to 45° or more, the length of the linear main cutting edge 21 can be sufficiently secured, and thus a radial cutting depth ae can be made large, and high-efficiency machining can be performed. In addition, since the linear main cutting edge 21 is lengthened, the temperature rise during cutting can be suppressed, and the life of the cutting insert 1 is extended. More preferably, the angle $\theta 3$ is 50° or more.

By setting the angle $\theta 3$ to 85° or less, the area of the second side surface 11B can be sufficiently secured to be large, and the area of the restraining portion between the cutting insert 1 and the holder 31 can be increased. The cutting insert 1 can be firmly restrained, and thus high-efficiency machining can be easily performed. More preferably, the angle $\theta 3$ is 80° or less.

In the present embodiment, it is preferable that the main cutting edge 21 is a linear cutting edge, and in a case where a cutting edge length of the main cutting edge 21 is denoted by L1 and an inscribed circle diameter of the rake face 2 is denoted by D1, $0.35 \times D1 \leq L1 \leq 0.60 \times D1$ is satisfied.

By setting the cutting edge length L1 of the main cutting edge 21 to $0.35 \times D1$ or more, the length of the linear main cutting edge 21 can be sufficiently secured, and thus the radial cutting depth ae can be made large, and high-efficiency machining can be performed. In addition, since the linear main cutting edge 21 is lengthened, the temperature rise during cutting can be suppressed, and the life of the cutting insert 1 is extended. More preferably, the cutting edge length L1 is $0.40 \times D1$ or more. By setting the cutting edge length L1 of the main cutting edge 21 to $0.60 \times D1$ or less, the area of the second side surface 11B can be sufficiently secured to be large, and the area of the restraining portion between the cutting insert 1 and the holder 31 can be made large. The cutting insert 1 can be firmly restrained, and thus high-efficiency machining can be easily performed. More preferably, the cutting edge length L1 is $0.55 \times D1$ or less.

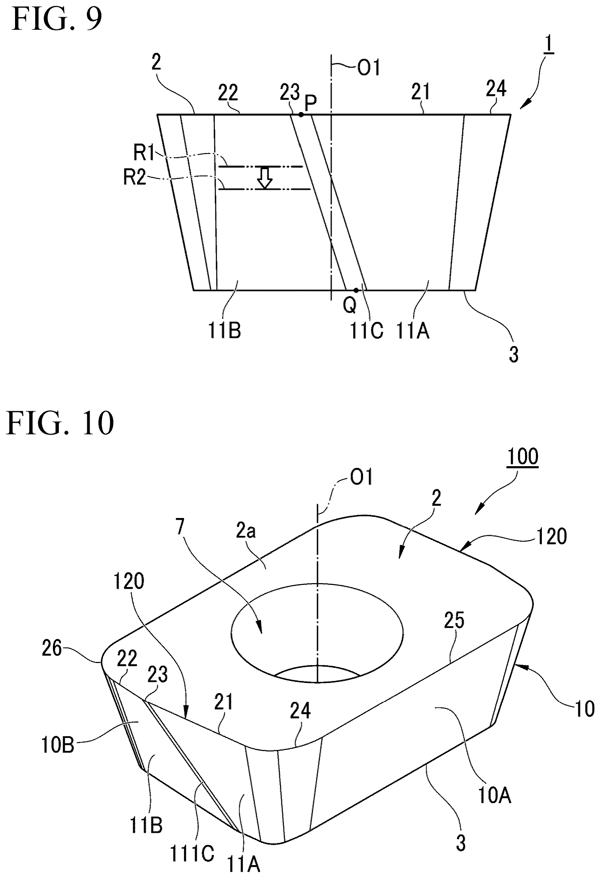

In addition, in the present embodiment, the width of the second side surface 11B in a direction perpendicular to the center line O1 is increased toward the seating surface 3, so that the holder 31 can also be adapted to a change in shape due to the use over time. FIG. 8 is an explanatory diagram showing a change in a restraining state of the cutting insert 1 due to a change in the holder 31 over time. FIG. 9 is an explanatory diagram showing a change in a restraining position.

As shown in FIGS. 8 and 9, in the indexable rotary cutting tool 30 in a new product state, a restraining portion R1, which is a contact position between the second side surface 11B of the cutting insert 1 and the mounting seat wall surface 35, is located at a relatively high position in the thickness direction of the cutting insert 1. On the other hand, in a case where the holder 31 is worn due to the use over time, an upper end corner portion of the mounting seat wall surface 35 is rounded due to the wear, as shown in the right diagram of FIG. 8. In a case where the cutting insert 1 is mounted on the worn holder 31 in this way, a height position of a restraining portion R2 is lower than that of the restraining portion R1 and approaches the mounting seat bottom surface 34.

As shown in FIG. 9, since the width of the second side surface 11B in a direction perpendicular to the center line O1 is increased toward the seating surface 3, the length of the restraining portion R2 after the holder wear is larger than the length of the restraining portion R1 at the time of being new. Therefore, in a case where the holder 31 is deteriorated due to the use over time, the restraining force of the cutting insert 1 can be increased, and thus the influence of the deterioration of the holder 31 on the machining quality can be reduced.

A virtual line Lb shown in FIG. 5 is a straight line that, in the shown mounting state, conveniently indicates a direction in which a contact portion (restraining portion) between the second side surface 11B and the mounting seat wall surface 35 extends. The virtual line W is a straight line that passes through a tool's lowest point 20L of the indexable rotary cutting tool 30 and is perpendicular to the rotation axis J1. In the present embodiment, the virtual line Lb and the virtual line W are substantially parallel to each other. On the other hand, the main cutting edge 21 that cuts into the workpiece is inclined axially rearward with respect to the virtual lines Lb and W toward the radially outer side of the holder 31.

During the cutting operation, a force F0 acts on the cutting insert 1 in a direction perpendicular to the main cutting edge 21. As a result, a force F1 in a direction parallel to the force F0 acts on the mounting seat wall surface 35. Since the mounting seat wall surface 35 and the force F1 intersect each other at an angle of less than 90°, the force F1 can be decomposed into a component that vertically presses the mounting seat wall surface 35 and a component that is directed to a radially inner side of the holder 31. Therefore, the cutting insert 1 is pressed toward the radially inner side, that is, the mounting seat wall surface 36 due to the cutting resistance. With the indexable rotary cutting tool 30 of the present embodiment, the cutting insert 1 is pressed against the mounting seat wall surfaces 35 and 36 due to the cutting resistance during the cutting operation, and thus the cutting insert 1 is firmly restrained to the holder 31. Since the cutting operation can be performed while maintaining a stable posture of the cutting insert 1, a high-quality machining surface can be obtained.

In the present embodiment, it is preferable that the tool's lowest point 20L is located on the wiper edge 22 and the cutting angle K satisfies $5° \leq K \leq 25°$.

Since the tool's lowest point 20L is located on the wiper edge 22, the width of the chips is increased, and a rise in the cutting temperature can be suppressed during the cutting operation. As a result, the cutting edge life can be improved.

By setting the cutting angle K to 5° or more, the gripping property to the workpiece is improved.

By setting the cutting angle K to 25° or less, it is possible to prevent the chips from being excessively thick and to obtain good chip discharge performance.

(Modification Example)

In FIGS. 1 to 3, the cutting insert 1 having the cutting angle K of 21° is shown as an example. A cutting insert 100 of a modification example shown in FIGS. 10 to 12 is a cutting insert having a cutting angle K of 10°.

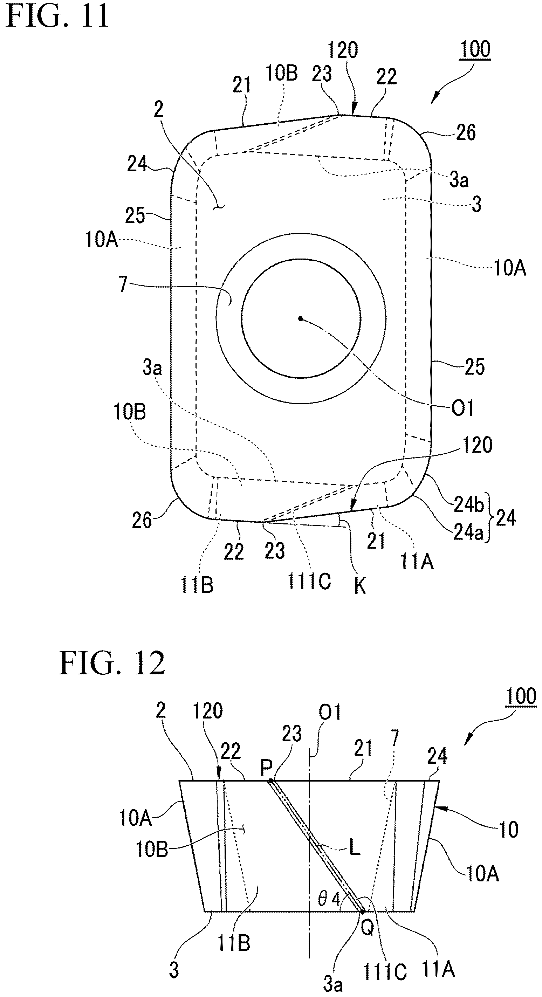

FIG. 10 is a perspective view of the cutting insert 100. FIG. 11 is a plan view showing a configuration of a rake face of the cutting insert 100. FIG. 12 is a side view showing a configuration of a side surface of the cutting insert 100.

In FIGS. 10 to 12, the portions denoted by the same reference numerals as those in FIGS. 1 to 3 are portions having the same functions as the cutting insert according to the above-described embodiment. The detailed description of the common parts may be omitted.

The cutting insert 100 includes the rake face 2 that forms one of a pair of polygonal surfaces, a seating surface 3 that forms the other of the pair of polygonal surfaces, the side surface 10 that connects the rake face 2 and the seating surface 3, and the mounting hole 7 for mounting in a holder. A cutting edge portion 120 is provided on an intersecting ridgeline between the rake face 2 and the side surface 10. The cutting edge portion 120 includes a peripheral cutting edge 25, a corner edge 24, a main cutting edge 21, a wiper edge 22, and an inner peripheral arc edge 26.

The main cutting edge 21 and the wiper edge 22 are provided on an intersecting ridgeline with the side surface 10B continuous to the short side of the rake face 2. The peripheral cutting edge 25 is provided on an intersecting ridgeline with the side surface 10A continuous to the long side of the rake face 2. The corner edge 24 is provided between the main cutting edge 21 and the peripheral cutting edge 25. The inner peripheral arc edge 26 is provided on a side of the wiper edge 22 opposite to the main cutting edge 21. The cutting edge portion 20 includes a convex curved edge 23 that connects the main cutting edge 21 and the wiper edge 22.

The corner edge 24 is continuous to the main cutting edge 21 and is located at a corner portion of the rake face 2. The corner edge 24 has a composite arc shape consisting of a plurality of arcs in the plan view shown in FIG. 11. The corner edge 24 includes a first arc edge 24a connected to the main cutting edge 21 and an outermost peripheral arc edge 24b located at an outermost peripheral portion in the corner edge 24. The first arc edge 24a and the outermost peripheral arc edge 24b are arc-shaped cutting edges having different radii of curvature. A radius of curvature of the outermost peripheral arc edge 24b is larger than a radius of curvature of the first arc edge 24a.

In the cutting insert 100 of the modification example, as shown in FIG. 11, an angle formed between the main cutting edge 21 and the wiper edge 22 corresponding to the cutting angle K is 10°. The cutting angle K of the cutting insert 100 is smaller than the cutting angle K (21°) of the cutting insert 1 shown in FIG. 2. Therefore, a difference in the angle between the first side surface 11A continuous to the main cutting edge 21 and the second side surface 11B continuous to the wiper edge 22 is smaller than that in the configuration of the cutting insert 1 of the previous embodiment. As a result, as shown in FIG. 12, the width of the boundary region 111C that partitions the first side surface 11A and the second side surface 11B is narrower than the width of the boundary region 11C in the embodiment shown in FIG. 3.

In addition, an angle θ4 formed between the straight line L connecting the end point P and the end point Q of the boundary region 111C and the seating surface 3 is smaller than the angle 03 in the above-described embodiment.

With the cutting insert 100 of the modification example of the above-described configuration, since the end point P of the boundary region 111C is disposed at a position farther from the corner edge 24, it is easy to form the linear main cutting edge 21 to be long. The local temperature rise in the main cutting edge 21 during cutting is further easily suppressed.

In addition, in the cutting insert 100 of the modification example, the degree to which the width of the second side surface 11B continuous to the wiper edge 22 increases toward the seating surface 3 side is also large. Since the contact area between the second side surface 11B and the mounting seat wall surface 35 is increased in a case where the cutting insert 100 is mounted in the holder 31, the mounting posture of the cutting insert 100 is more stable.

The embodiment of the present invention has been described above, but the configurations and the combination thereof in the embodiment are merely examples, and additions, omissions, substitutions, and other changes of configuration can be made without departing from the gist of the present invention. Further, the present invention is not limited by the embodiment.

INDUSTRIAL APPLICABILITY

It is possible to provide the cutting insert capable of achieving both the strength of the main cutting edge and the suppression of the wear of the flank face of the wiper edge and having excellent restraining to the holder, and the indexable rotary cutting tool including the cutting insert.

REFERENCE SIGNS LIST

1 Cutting insert

2 Rake face
3 Seating surface
7 Mounting hole
10, 10A, 10B Side surface
11A First side surface
11B Second side surface
11C Boundary region
20 Cutting edge portion
20L Tool's lowest point
21 Main cutting edge
22 Wiper edge
23 Convex curved edge
24 Corner edge
30 Indexable rotary cutting tool
31 Holder
33 Insert mounting seat
J1 Rotation axis
K Cutting angle
L1 Cutting edge length
O1 Center line
P, Q End point
θ1, θ2 Flank angle
θ3 Angle of straight line L

Claims

1.  A cutting insert having a polygonal plate shape, comprising:

a rake face configured to form one of a pair of polygonal surfaces;
a seating surface configured to form the other of the pair of polygonal surfaces;
a side surface configured to connect the rake face and the seating surface; and
a mounting hole configured to be open to the rake face and the seating surface and to penetrate the cutting insert in a thickness direction,
wherein a cutting edge portion is provided on an intersecting ridgeline between the rake face and the side surface,
the cutting edge portion includes a corner edge, a main cutting edge connected to the corner edge, a convex curved edge connected to the main cutting edge, and a wiper edge connected to the convex curved edge,
the side surface includes a first side surface continuous to the main cutting edge, a second side surface continuous to the wiper edge, and a boundary region continuous to the convex curved edge,
the first side surface and the second side surface are laterally partitioned by the boundary region extending between the rake face and the seating surface in a side view in which the side surface is viewed as a front,
a flank angle 01 of the main cutting edge and a flank angle θ2 of the wiper edge satisfy a relationship of θ1 < θ2, and
in a case where an end point of the boundary region on the rake face side is defined as an end point P and a center line of the mounting hole is denoted by O1, the end point P is located at a position farther from the corner edge than the center line O1 in the side view.

2. The cutting insert according to Claim 1, wherein in a case where an end point of the boundary region on the seating surface side is defined as an end point Q, the end point Q is located at a position closer to the corner edge than the center line O1 in the side view.

3. The cutting insert according to Claim 1 or 2, wherein the flank angles $\theta 1$ and $\theta 2$ satisfy $8° \leq \theta 1 \leq 18°$ and $12° \leq \theta 2 \leq 25°$.

4. The cutting insert according to Claim 1 or 2, wherein in the side view, an angle $\theta 3$ formed between a straight line L connecting the end point P and the end point Q and the seating surface satisfies $45° \leq \theta 3 \leq 85°$.

5. The cutting insert according to Claim 1 or 2,

   wherein the main cutting edge is a linear cutting edge in a plan view in which the rake face is viewed as a front, and
   in a case where a cutting edge length of the main cutting edge is denoted by L1 and an inscribed circle diameter of the rake face is denoted by D1,

$$0.35 \times D1 \leq L1 \leq 0.60 \times D1$$

   is satisfied.

6. An indexable rotary cutting tool comprising:

   the cutting insert according to Claim 1 or 2; and
   a holder in which the cutting insert is attachably and detachably mounted and that is configured to rotate about a rotation axis,

   wherein the holder includes an insert mounting seat that comes into contact with a flank face for the wiper edge of the cutting insert and with the seating surface.

7. The indexable rotary cutting tool according to Claim 6,

   wherein a tool's lowest point is located on the wiper edge, and
   a cutting angle K satisfies $5° \leq K \leq 25°$.

# FIG. 1

FIG. 2

FIG. 3

FIG. 4A

FIG. 4B

FIG. 5

J1

TD

30

31

33

11B

35

11B

35

F1      Lb

1

1

38

F0      21

33

K      W

22

11B

20L

FIG. 6

## FIG. 7

## FIG. 8

FIG. 9

FIG. 10

FIG. 11

FIG. 12

## INTERNATIONAL SEARCH REPORT

| International application No. |
| --- |
| **PCT/JP2024/012588** |

### A. CLASSIFICATION OF SUBJECT MATTER

*B23C 5/20*(2006.01)i; *B23C 5/06*(2006.01)i; *B23C 5/10*(2006.01)i
FI:    B23C5/20; B23C5/06 A; B23C5/10 D

According to International Patent Classification (IPC) or to both national classification and IPC

### B. FIELDS SEARCHED

Minimum documentation searched (classification system followed by classification symbols)

B23C5/20; B23C5/06; B23C5/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2017/122715 A1 (MITSUBISHI MATERIALS CORPORATION) 20 July 2017 (2017-07-20)<br>    paragraphs [0019]-[0030], fig. 1-10 | 1-2, 4-6 |
| X | WO 2021/246321 A1 (KYOCERA CORPORATION) 09 December 2021 (2021-12-09)<br>    paragraphs [0007]-[0068], fig. 1-17 | 1-2, 4-6 |
| A | JP 2018-503525 A (SANDVIK INTELLECTUAL PROPERTY AB) 08 February 2018 (2018-02-08) | 1-7 |
| A | CN 113695652 A (XIAMEN GOLDEN EGRET SPECIAL ALLOY CO., LTD.) 26 November 2021 (2021-11-26) | 1-7 |

☐ Further documents are listed in the continuation of Box C.          ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 May 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012588**

| Patent document cited in search report | | | Publication date (day/month/year) | Patent family member(s) | | | Publication date (day/month/year) |
|---|---|---|---|---|---|---|---|
| WO | 2017/122715 | A1 | 20 July 2017 | US | 2019/0015911 | A1 | |
| | | | | paragraphs [0031]-[0042], fig. 1-10 | | | |
| | | | | EP | 3403751 | A1 | |
| | | | | CN | 108472751 | A | |
| | | | | KR | 10-2018-0100408 | A | |
| | | | | JP | 2017-124464 | A | |
| WO | 2021/246321 | A1 | 09 December 2021 | US | 2023/0294183 | A1 | |
| | | | | paragraphs [0027]-[0090], fig. 1-17 | | | |
| | | | | CN | 115697605 | A | |
| JP | 2018-503525 | A | 08 February 2018 | US | 2018/0015554 | A1 | |
| | | | | WO | 2016/120099 | A1 | |
| | | | | EP | 3050655 | A1 | |
| | | | | CN | 107206512 | A | |
| | | | | KR | 10-2017-0109560 | A | |
| CN | 113695652 | A | 26 November 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023053255 A
- JP 2022151053 A